# EUROPEAN PATENT APPLICATION

(11) **EP 1 237 356 A1**
(43) Date of publication of application: **04.09.2002**
(21) Application number: 99974258.8
(22) Date of filing: 06.12.1999
(51) Int. Cl.: H04N 1/60, H04N 1/46, G06T 1/00

(54) **HUE CALIBRATION SYSTEM FOR DIGITAL IMAGE PRINTING**

(71) Applicant: Photographic Art Research Laboratory, Tokyo 105-8423 (JP)
(72) Inventor: AOKI, Akira, Kanagawa 211-0035 (JP)
(74) Representative: Paget, Hugh Charles Edward
(86) International application number: JP9906827
(87) International publication number: WO01043423

(57) **Abstract**

A reference color image supplied to a first image processing computer system is printed and recorded in the magneto-optical recording medium. The reference color data (brightness, contrast, chroma, and color balance) of the image are also checked on a monitor. Next, the reference color image data recorded in the magneto-optical recording medium is supplied to a second image processing computer system, and the color data on the monitor is adjusted to print the image of hue corresponding to that of the image printed on the first computer system. The difference between the color data in this condition and the reference color data is assumed to be a corrective value. When a given photograph image recorded in the magneto-optical recording medium through the first computer system is printed on the second computer system, the color data on the monitor is corrected according to the corrective value.

## Description

### TECHNICAL FIELD

The present invention relates to a digital image print preparation technique for preparing a digital image by an ink jet printer or other digital printer using digital data input to an MO (magneto-optic disk), CD-ROM, or other optical disk storage medium (hereinafter simply referred to as "basic digital data"), more particularly relates to a process for preparing a digital image by a printer using a computer system independent from the computer system preparing the basic digital data.

### BACKGROUND ART

Along with the recent rapid advances made in computer image processing technology, the practice has spread of preparing an MO or other optical disk storage medium in which an image has been input as digital data and preparing a digital image by a digital printer provided with the computer preparing this storage medium based on the digital data of this optical disk storage medium. Another practice has been mass production scale printing comprising printing an image (including text layout) by a printing machine operating by substantially the same principle as an ink jet print system using an optical disk storage medium prepared in this way.

As is already known, when printing by an ink jet printer or other printer, the hue of the printed photographic image (luminance, contrast, chroma, and color balance) does not necessary match the hue of the monitor image. In this case, the practice has been to perform so-called "color matching" for matching the hue of the original photographic image and the hue of the monitor image as with operation by the Color Sync System (registered trademark) in the case of use of for example an Epson printer (registered trademark) or to prepare a new digital photographic image by adjusting the hue and composition of a dialog display using the monitor image as a starting point, but whatever the case, the hue of the monitor image does not necessarily match with the digital photographic image which is printed. Rather, usually it is different. Therefore, the practice has been to adjust the hue (luminance, contrast, chroma, and color balance) of the image by color correction data of a color adjustment menu of a printer driver setting screen displayed on the monitor (hereinafter referred to as the "color data") by a known technique to match the hues of the digital photographic image printed by the printer and the monitor image. This adjustment will be called the "basic calibration" of the hue below.

Further, even if loading a storage medium of digital data of an image prepared by a computer of a computer image processing system for which basic calibration has been performed into a computer of a computer image processing system different from this system and printing out a digital photograph by a printer of this system, often the hue will not match with that of the digital photographic image prepared by the printer of the computer system (former). This is particularly the case when the printer is different. This problem of mismatch in hue is becoming a major problem with the afore-mentioned mass production scale system using a printing machine.

On the other hand, recently such digital photographs have been printed out by professional services. Further, in addition to this computer image processing technology, along with the advances in data communications technology using the Internet, the trend has been toward larger scale systems. The afore-mentioned color problem remains to be solved in terms of rationalization of cost and work efficiency.

### DISCLOSURE OF INVENTION

The object of the present invention is to rationally solve the above problem of the mismatch of hue. For convenience, the following explanation will be made using as an example the use of an MO (magneto-optic disk) as an optical disk storage medium.

Along with the advances in and spread of computer image processing technology, digital photographs have come to be printed by individuals as well, but when using an MO to print a desired digital photograph by the digital data stored therein, the computer image processing system used is not always the same as the system preparing the MO. Therefore, as explained above, when printing an image by the color data displayed by the computer monitor, sometimes the result does not match the digital photograph of the computer system preparing the MO in hue. In this case, calibration is necessary. That is, repetitious complicated work becomes necessary.

Computer image processing equipment, like in other industries, is being manufactured by mass production of equipment of identical models having identical functions as that comprising the computer image processing system. The system is made up of an assembly of such equipment. Even if the same models of image processing equipment sold from the same company offer substantially the same performance, there is some variability. Therefore, when assembling such equipment to put together a computer image processing system, naturally it is not possible to avoid differences in function unique to each system among different assembled computer image processing systems. This problem is even more notable when the printers are different. Further, this becomes a factor behind the mismatch of print hue when printing the same original photographic image by a pair of specific computer image processing systems.

The present invention is designed to solve these problems.

As explained above, the basic technical idea of the present invention comprises, from the standpoint of the fact that the mismatch of hue of a printed photographic image when printing a digital photograph through an MO by a specific pair of computer image processing systems (one being referred to as a "master computer image processing system" and the other being referred to as a "sister image processing system") for the same original photographic image arises due to the variation in performance and characteristics unique to each computer image processing system and that unless special external force acts on it, this mismatch is fixed, first preparing a print image by the master system using the basic color image as the original image, finding the color data displayed on a monitor of the computer (luminance, contrast, chroma, and color balance "C, M, Y"), storing the digital data stored in the computer of the master system corresponding to the basic color image in an MO, storing the digital data of the MO in a computer of the sister system, then adjusting the color data displayed on the monitor of the computer of the sister system so as to prepare a print image substantially matching in hue with the print image of the master system, finding the color data displayed on the monitor together, comparing the two sets of color data, using the difference as the correction value of the color data, processing an independent original photographic image separately by the master computer system and printing the digital photographic image, then, when printing the digital photographic image by the sister computer system using the MO prepared by the master computer system, correcting the color data displayed on the monitor of the computer of the sister computer system by this correction value, then printing so as to print a digital photographic image of a hue the same as the case using the master computer system.

That is, the present invention covers a pair of computer image processing systems comprised of a specific master computer system and a sister computer system and comprises storing a reference color image prepared in advance as digital data in a computer of the master computer system, printing a digital image (called basic digital image) by a printer of this system, confirming the color data corresponding to this print (called reference color data) by displaying it on a monitor of the computer, storing the reference color image as digital data in an MO, inputting the digital data of this MO in a second computer image processing system, adjusting the color data and printing a digital color image substantially matching in hue the reference digital image, comparing the color data corresponding to the digital color image with the reference color data, finding the difference, and deciding on that value as the correction value of the color data,
then, when printing a digital photograph by the sister computer system using an MO storing the digital data of the digital photograph prepared by the master computer image for any original photographic image, using the correction value to correct the color data displayed on the monitor of the sister computer, then starting the printing of the printer and printing the desired digital photograph.

The object is achieved by providing a calibration system for hue in a digital image print.

### BRIEF DESCRIPTION OF DRAWINGS

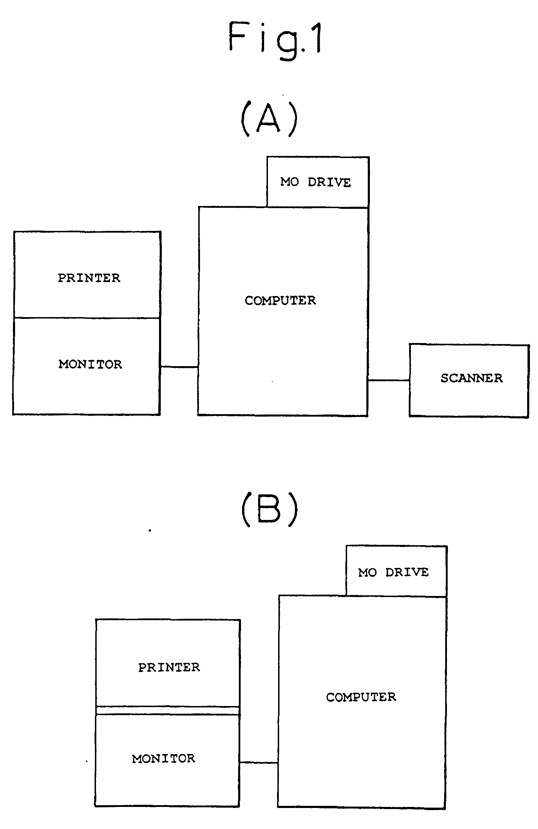

FIG. 1 shows an example of the arrangement of equipment of a master computer image processing system and sister computer image processing system to which the present invention is applied;
FIG. 2 is a flow chart of the steps for working the present invention by the computer image processing system of FIG. 1;
FIG. 3 shows a basic color image used for the system of FIG. 2;
FIG. 4 shows an original photographic image (by a line drawing) used for an experiment to which the present invention is applied; and
FIG. 5 shows a digital photograph (print) by a line drawing prepared by a master computer system from the original photographic image of FIG. 4.

### BEST MODE FOR CARRYING OUT THE INVENTION

Below, the present invention will be explained in detail taking as an example the case of processing an original photographic image by a master computer system using a computer (Power Macintosh G31), printer (Epson Inkjet Printer 2000C (registered trademark)), MO drive (Olympus Turbo MO 640S (registered trademark)) and a scanner (Microtec ScanMaker 5 (registered trademark)) to prepare a digital photograph, processing the original photographic image by a known computer image processing technique to obtain a digital photographic image having the desired hue, preparing this by the printer, preparing an MO storing the digital data of the digital photograph, and using this MO to replicate the digital photograph by a sister computer system having a different printer of the same model as the master computer system.

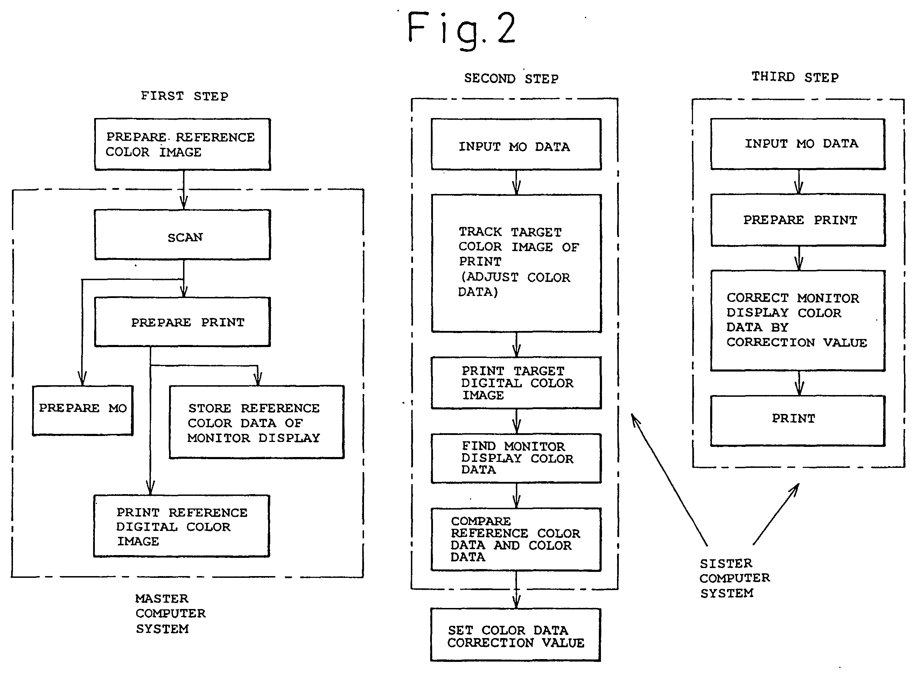

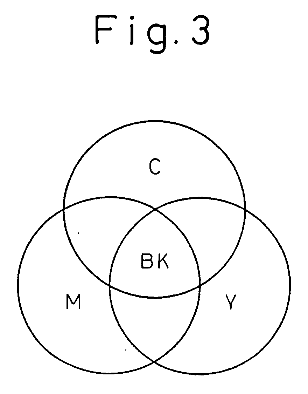

As shown in FIG. 2 showing the steps of work of the present invention, first, a basic color image, for example, a known RGB basic color image (FIG. 3) obtained by combining the three primary colors of cyan (C), magenta (M), and yellow (Y) and black (BK) in mutual relationship, was prepared, the basic color image was stored as digital data in a computer through a scanner of the master computer system, the digital data was stored in an MO, a digital color image was printed as basic digital image by a printer, and the color data displayed on the monitor (luminance, contrast, chroma, and color balance) was found, whereupon basic data of a luminance of -20, a contrast of -1, a chroma of 0, a cyan C of 0, a magenta of -1, and a yellow Y of 0 was obtained.

Next, the digital data of the MO was stored in the computer of the system computer system, the digital image matched in hue with the basic digital image by adjusting the color data of the monitor was printed by the printer of the system, and the color data displayed on the monitor of the computer of the system was found, whereupon the following color data was obtained. That is, this data included a luminance of -13, a contrast of 5, a chroma of 0, a cyan of 0, a magenta of -1, and a yellow of 0. Therefore, the difference between the above basic color data was a luminance of +7 and a contrast of +6.

Therefore, when printing a digital photograph having substantially the same hue as a digital photograph prepared by the master computer system by a printer of the sister computer system using an MO prepared by the master computer system, it was possible to print a desired digital color image by correcting the color data displayed on the computer monitor using the difference of the color data as the correction value before operating the printer.

As a result of repeated basic experiments, it became clear that there was a certain fixed difference in the above color data in the digital photographic images printed by printers between the master computer system and a specific sister computer system and that using the certain fixed difference in color data as the calibration value, it was possible to easily replicate a digital photograph prepared by a master computer system by simple correction of the color data by a printer of the specific sister computer system.

Next, an example of preparation of a digital photograph using a photograph of Mt. Bandai in Fukushima prefecture taken from the highest point of the Agatsuma Skyline road as an original photographic image in the early morning of one summer day will be explained. Since the color photograph was an original photographic image, the following explanation will be made using a traced line drawing.

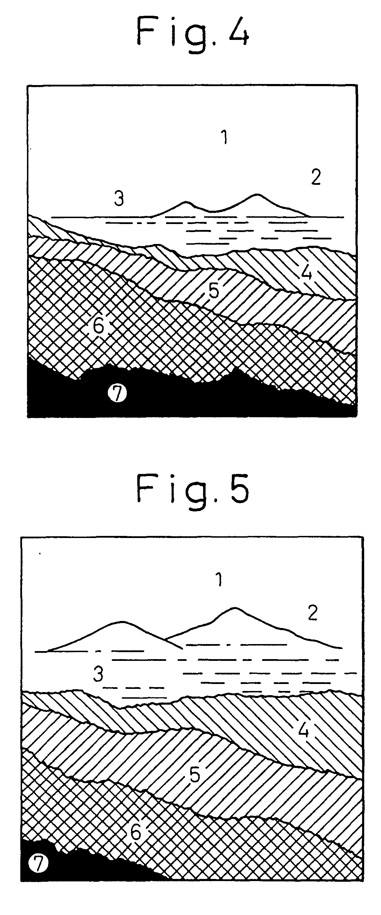

FIG. 4 shows a photograph of scenery, by a line drawing, having mountain ranges 4, 5, 6, and 7 and white clouds 3 in the foreground and a seemingly floating mountain peak 1 lit by the rising sun. The mountain ranges increase in luminance from the front in the order of 7, 6, 5, and 4. Mt. Bandai 2 was positioned with the dusky sky 1 in the background, but due to the morning fog, was shown in a somewhat fogged state. A digital photograph using the positive film of this photograph of scenery as an original photographic image was prepared by adjusting the luminance, contrast, chroma, and color balance of the background 1, peak 2 of Mt. Bandai, the cloud bank 3, and the mountain ranges 4, 5, 6, and 7. FIG. 5 is a line drawing corresponding to the digital photograph.

The color data corresponding to the digital photograph included a luminance of -10, a contrast of 0, a chroma of 10, a cyan C of 7, a magenta M of 0, and a yellow Y of -5. Next, when the digital data of the digital photograph was input into the computer of the sister computer system by an MO prepared corresponding to the digital photograph by the master computer system, the dialog color data of the monitor was found, and the image was printed by that color data, and a digital photograph having a remarkable difference in the luminance and contrast ended up being printed. When the image was printed by setting to a luminance of -3, a contract of 6, a chroma of 10, a cyan C of 7, a magenta M of 0, and a yellow Y of -5 of the dialog color data corrected by the afore-mentioned calibration, it was possible to prepare the desired replicated print.

As clear from the above experimental results, after requesting a professional service to perform computer image processing and having it prepare the desired digital photograph, an MO corresponding to the digital photograph is received from the professional service. When preparing a digital photograph of the same hue when subsequently needed by the printer of one's own computer system, it was confirmed that it was possible to easily achieve the objective by adopting the afore-mentioned calibration technique.

Here, a practical problem which should be considered is the effect of changes in performance of the equipment due to aging after years of use of the equipment, in particular the printer, of the sister computer system. Therefore, naturally it becomes necessary to check the calibration value at all times in accordance with the change of the calibration value along with time. A major feature of the invention of the present application is the great merit in work efficiency and cost when compared with adjustment of the hue for each replication by a sister computer system of a digital photograph prepared by a master computer system.

Further, the calibration system of hue in a digital image print according to the present invention was explained with reference to an embodiment of a system configured by a Power Macintosh G3 (registered trademark), Olympus Turbo MO 640S (registered trademark), Turbo MO 640S (registered trademark), and Microtec ScanMaker 5 (registered trademark), but the basic technical idea naturally can be also applied to printing by a so-called digital image printing machine based on the same principle.

## Claims

1. A calibration system for hue in a digital image print of a digital photograph preparation system for printing a digital photograph by a printer of a sister computer image processing system by a master computer image processing system and a magneto-optic storage medium processing digital data of a digital photograph prepared by this image processing system, comprising
a first step of preparing a reference color image, inputting this reference color image as digital data into a computer of the master computer image processing system, printing the reference color digital image by a printer of the system, and storing corresponding color data (luminance, contrast, chroma, and color balance) as reference color data by a monitor display of said computer;
a second step of inputting the stored data of the magneto-optic storage medium prepared in the first step into a computer of a sister computer image processing system, printing by the printer of this system a color digital image substantially matching in hue the reference color digital image prepared by the master computer system, finding the color data corresponding to the digital image by the monitor of the computer of this system, then finding the difference from the reference color data as a correction value; and
a third step of, when printing the individual independent digital photographic image prepared by the master computer image system by a printer of the sister computer image processing system, inputting the digital data of the magneto-optic storage medium corresponding to the digital photographic image prepared by the master computer image processing system into the computer of the sister computer image processing system, starting the print operation work, correcting the color data displayed on the monitor by said correction value, then printing.

2. A calibration system for hue in a digital image print as set forth in claim 1,
said calibration system **characterized in that** the sister computer image processing system does not include a scanner for scanning an original photographic image.

3. A calibration system for hue in a digital image print as set forth in claim 1,
said calibration system **characterized in that** the master computer image processing system has a scanner for scanning an original photographic image and **in that** the original image is stored as digital data in a computer of the master computer image processing system by the scanner.

4. A calibration system for hue in a digital image print as set forth in claim 1,
said calibration system **characterized by** inputting the digital data of an original image taken by a digital camera into the computer of the master computer image processing system.
